## Europäisches Patentamt

## European Patent Office

## Office européen des brevets

(11) Veröffentlichungsnummer: **0 186 771**
**A2**

# (12) EUROPÄISCHE PATENTANMELDUNG

(21) Anmeldenummer: 85114771.0

(22) Anmeldetag: 21.11.85

(51) Int. Cl.⁴: **C 05 F 9/02**

(30) Priorität: 01.12.84 DE 3443946

(43) Veröffentlichungstag der Anmeldung: 09.07.86
Patentblatt 86/28

(84) Benannte Vertragsstaaten: **AT BE CH DE FR GB LI NL**

(71) Anmelder: **Willibald, Josef, Frickinger Strasse 97,
D-7771 Frickingen 2 Altheim (DE)**

(72) Erfinder: **Willibald, Josef, Frickinger Strasse 97,
D-7771 Frickingen 2 Altheim (DE)**

(74) Vertreter: **Seemann, Norbert W., Brehmstrasse 37,
D-7320 Göppingen (DE)**

(54) **Verfahren zum Umsetzen und Absieben von Kompost sowie hierfür geeignetes Arbeitsgerät.**

(57) Ein Verfahren zum gleichzeitigen Umsetzen, Absieben und Nachzerkleinern von in Mieten (1) gelagertem Kompost, sieht deren stirnseitiges Abtragen mittels Fräsvorrichtung (3, 4) in Teilsträngen (1a) sowie Aufgeben des Gutes (11) auf eine Siebeinrichtung (5, 6) vor, wobei eine Absiebung der fertigen Feinerde (12) mit Nachzerkleinerung des Grobmaterials (13) und Ablage bzw. Mischung des daraus anfallenden Häckselgutes (14) mit der Feinerde (12) stattfindet.

European Patent Attorney : 0186771

Dipl.-Ing. **NORBERT W. SEEMANN**

Patent- und Zivilingenieur
Mandataire en brevets Européens

— 1 —

Patentbüro:

Brehmstraße 37
D-7320 Göppingen

Tel. 07161-71166

Telegramme:
„Seepatent"

18. November 1985

EP (PG) 8428 W

Anmelder:

Josef Willibald
Frickinger Straße 97

7771 Frickingen 2 (Altheim)

Verfahren zum Umsetzen und Absieben von
Kompost sowie hierfür geeignetes Arbeitsgerät

Die Erfindung bezieht sich auf ein Verfahren nach dem Oberbegriff des Hauptanspruchs sowie auf das bauliche Grundprinzip eines zur Verfahrensdurchführung geeigneten Arbeitsgerätes.

Da bislang zwar stationäre Absiebeinrichtungen sowie verfahrbare Umsetzgeräte in der Praxis bekannt sind, ist es Aufgabe der vorliegenden Erfindung, beides in einem Verfahrensgang sowie in einer bewegbaren Gerätekombination zu vereinigen. Ausgangsbasis ist dabei vornehmlich die Bearbeitung von zu Mieten aufgeschichtetem Kompost im kommunalen oder privatwirtschaftlichem Bereich, sowie bei der Abfallkompostierung in Müllaufbereitungsanlagen u.dgl.

Die Lösung der mit der Erfindung gestellten Aufgabe ist verfahrensmäßig aus den Patentansprüchen ersichtlich sowie vorrichtungsmäßig weitestgehend schematisch in der Zeichnung angedeutet. Letztere zeigt dabei ein maschinelles Grundprinzip und zwar in

Fig. 1    die Vorderansicht auf ein erfindungsgemäßes Gerät und

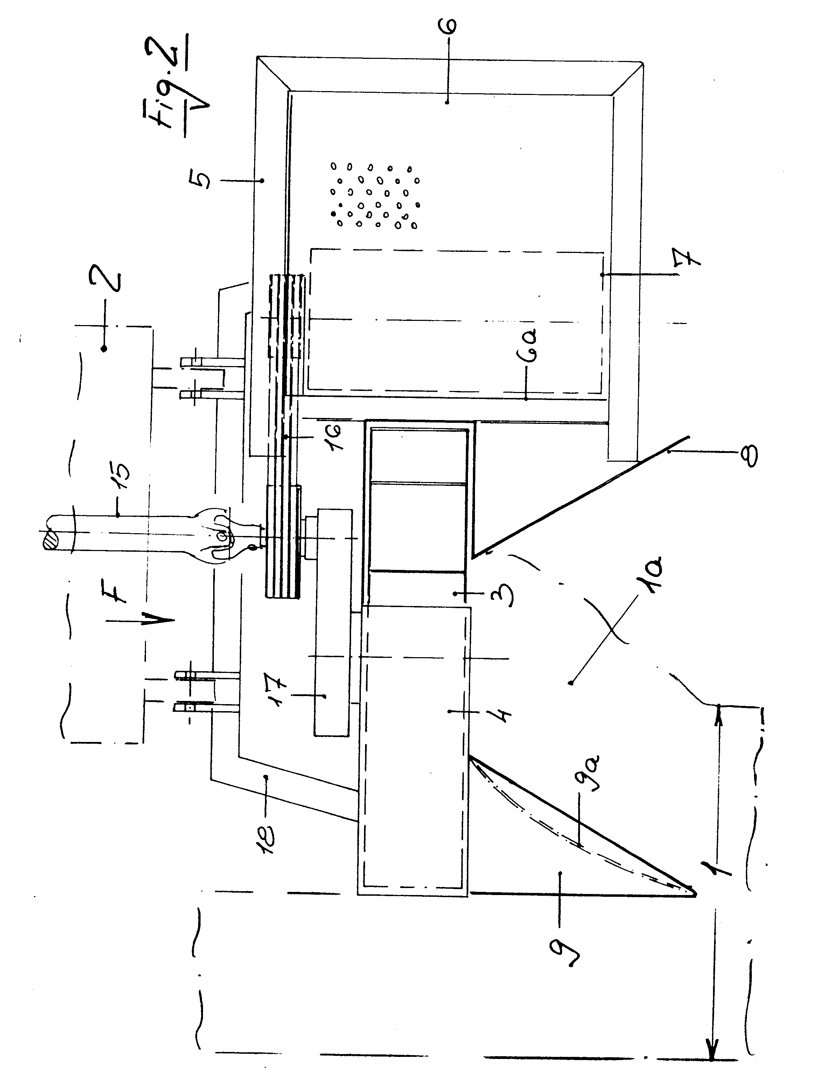

Fig. 2    eine Draufsicht zu Fig. 1.

Die dargestellte Vorrichtung, die im folgenden noch näher beschrieben wird, ist als Ganzes über einen Geräteanbaurahmen 18 mit einem Schlepper bzw. sonstigen, motorischen Geräteträger 2 vorzugsweise im Frontanbau verbunden, wobei über eine Gelenkwelle 15 die Antriebskräfte für die Fräsorgane 3, das Sieb 5, 6 sowie den Nachzerkleinerer 7, 7a, 7b mittels Riementrieben 16, 17 abgeleitet werden.

Der maschinelle bzw. vorrichtungsmäßige Grundaufbau ergibt sich somit durch einen Schlepper, Geräteträger 2 o.dgl. mit stirnseitig angebauten Organen 3, 4 zum Abfräsen der Kompostmiete 1 sowie einem vorzugsweise seitlich zum Schlepper 2 liegenden Schwing- bzw. Rüttelsieb 5, 6 mit dem Siebende 6a zugeordnetem Nachzerkleinerer 7, 7a, 7b , wobei das Fräsorgan 3, 4 als eine Art in einem Gehäuse 4 umlaufendes Schaufelrad 4 ausgebildet, der Nachzerkleinerer 7 als mit Schlegeln 7a versehene, rotierende Arbeitswelle 7b gestaltet und letztere zumindest in ihrem unteren Bereich von einer Art Siebkäfig 10 umgeben ist, durch den das nachzerkleinerte Gut 14 zum Boden "E" hin austreten kann. Anstelle der Ablage des das Rüttelsieb 5, 6 verlassenden Feinkompostes 12 und des Nachzerkleinerungsmaterials 14 auf dem Erdboden "E", kann in dem Bereich unterhalb von Siebkasten 5 bzw. des Austrittsschachtes 5a und Nachzerkleinerer 7, 10 auch ein Sammelbehälter 19 mitgeführt werden, der beispielsweise über ein Laufrad 20 gegenüber dem Erdboden "E" außen noch abgestützt sein müßte.

Dem Fräsorgan vorgeschaltet sind zudem noch Leit- und Trennelemente 8, 9 zum Aufspalten der Kompostmiete 1 und Zuführen eines Teiles la bzw. Stranges letzterer 1 zu den Fräs- und Förderorganen 3, 4; eine Art scharförmig gekrümmte Ausbildung 9a des Trennelementes 9 kann dabei von Vorteil sein, da sich dadurch ein besseres Herausschälen des jeweiligen Kompoststranges la aus der Miete 1 ergeben wird.

Letztlich ist erfindungsgemäß zudem vorgesehen, daß die Absiebeinrichtung 5, 6 zusammen mit dem Nachzerkleinerer 7, 7a, 7b, 10 eine von den Fräs- und Leitorganen 3, 4, 8, 9 trenn- bzw. abnehmbare Einheit bildet.

Hierdurch ist dann zum einen die Möglichkeit gegeben, jede Gruppe auch einmal getrennt für sich zu verwenden und zum anderen vor allem das Fräsorgan 3, 4 mit seinen Leit- und Trennelementen 8, 9 bei Flächenkompostierung auch dazu zu benutzen, den flächig liegenden Kompost zu Mieten oder Haufen maschinell zusammenzutragen, indem man von außen zur Mitte um das jeweilige Feld herumfährt.

Im wesentlichen dient die zuvor beschriebene Gerätekombination aber zur Durchführung folgender Verfahrensschritte:

a.  Stirnseitiges Abtragen bzw. streifenweises la Abfräsen der Kompostmiete 1 und kontinuierliches Aufgeben des so gelockerten Materials 11 im gleichen Arbeitsgang auf eine Absiebeinrichtung 4, 5.

b. Sammeln bzw. Ablegen der fertigen, durch den Siebboden 6 ausfallenden Feinkomposterde 12 unterhalb des Siebes 5, 6.

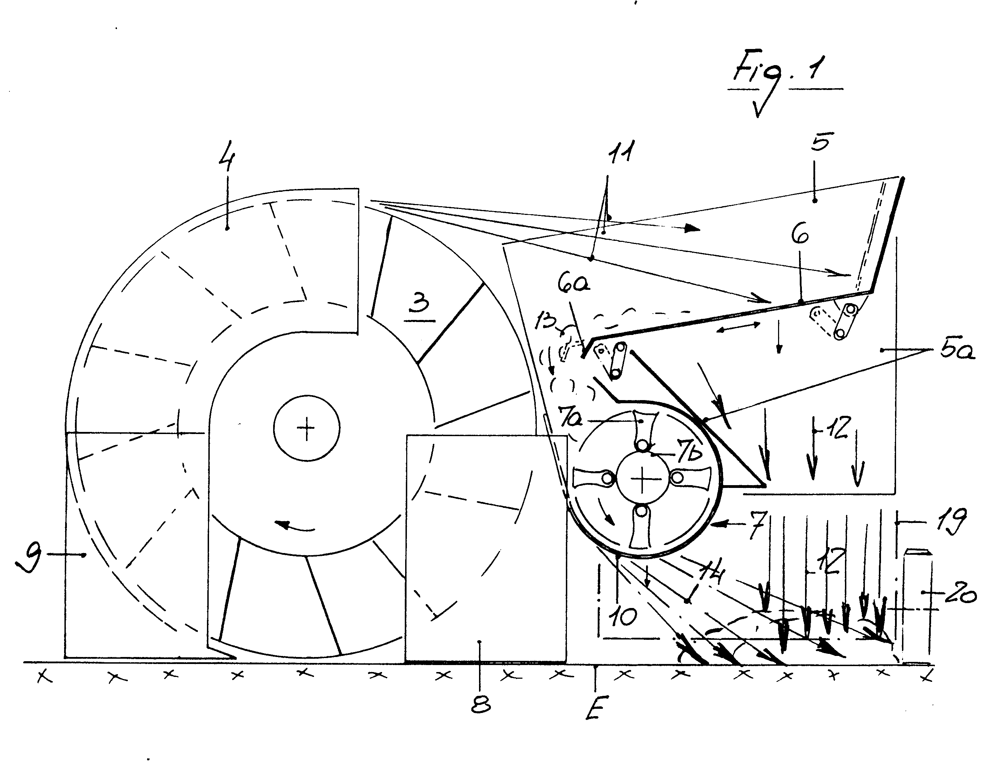

c. Nachzerkleinern der am Siebbodenende 6a ankommenden, unverrotteten Grobmaterialien 13 und Ablegen des danach anfallenden Gutes 14 zur weiteren Verrottung seitlich neben der Feinkomposterde 12 bzw. gemischt mit letzterer entsprechend der Darstellung in Fig. 1 auf dem Erdboden oder in einem mitgeführten Sammelbehälter 19, 20.

Bezugsziffernverzeichnis

| | | | |
|---|---|---|---|
| 1 | Kompostmiete | | |
| 1a | Teilstrang | | |
| 2 | Schlepper | | |
| 3 | Fräsorgan | | |
| 4 | Gehäuse | | |
| 5 | Siebkasten | | |
| 5a | Austrittsschacht | | |
| 6 | Siebboden | | |
| 6a | Siebbodenende | | |
| 7 | Nachzerkleinerer | | |
| 7a | Schlegel | | |
| 7b | Arbeitswelle | | |
| 8 | Leitelement | | |
| 9 | Trennelement | | |
| 9a | scharförmiger Teil | | |
| 10 | Siebkäfig | | |
| 11 | Kompostmaterial zum Sieb | | |
| 12 | Feinkomposterde | | |
| 13 | Grobmaterial | | |
| 14 | Nachzerkleinerungsmaterial | | |
| 15 | Gelenkwelle | | |
| 16 | Antrieb des Nachzerkleinerers sowie Siebes | | |
| 17 | Antrieb des Fräsorgans | | |
| 18 | Geräteanbaurahmen | | |
| 19 | Sammelbehälter | E | Erdboden |
| 20 | Laufrad | F | Fahrtrichtung |

European Patent Attorney  0185771

Dipl.- Ing. **NORBERT W. SEEMANN**  Patentbüro:

Patent- und Zivilingenieur  Brehmstraße 37
Mandataire en brevets Européens  D-7320 Göppingen

Tel. 07161-71166

Telegramme:
„Seepatent"

- 1 -

18. November 1985

EP (PG) 8428 W

Anmelder:

Josef Willibald

Frickinger Straße 97

7771 Frickingen 2 (Altheim)

Patentansprüche

1. Verfahren zum gleichzeitigen Umsetzen und Absieben von vornehmlich in Form von Mieten gelagertem Kompost,

g e k e n n z e i c h n e t   d u r c h

stirnseitiges Abtragen bzw. streifenweises ( 1a ) Abfräsen der Kompostmiete ( 1 ) und kontinuierliches Aufgeben des so gelockerten Materials ( 11 ) im gleichen Arbeitsgang auf eine Absiebeinrichtung ( 4, 5 ), Sammeln bzw. Ablegen der fertigen, durch den Siebboden ( 6 ) ausfallenden Feinkomposterde ( 12 ) unterhalb des Siebes ( 5, 6 )

sowie Nachzerkleinern der am Siebbodenende ( 6a ) ankommenden, unverrotteten Grobmaterialien ( 13 ) und
Ablegen des danach anfallenden Gutes ( 14 ) zur weiteren Verrottung seitlich neben der Feinkomposterde
( 12 ) bzw. gemischt mit letzterer.


2. Vorrichtungsprinzip zur Durchführung des Verfahrens
nach Anspruch 1,


g e k e n n z e i c h n e t   d u r c h


einen Schlepper, Geräteträger ( 2 ) o.dgl. mit stirnseitig angebauten Organen ( 3, 4 ) zum Abfräsen der
Kompostmiete ( 1 ) sowie einem vorzugsweise seitlich
zum Schlepper ( 2 ) liegenden Schwing- bzw. Rüttelsieb ( 5, 6 ) mit dem Siebende ( 6a ) zugeordnetem
Nachzerkleinerer ( 7, 7a, 7b ).


3. Vorrichtung nach Anspruch 2,


g e k e n n z e i c h n e t   d u r c h

Leit- und Trennelemente ( 8, 9 ) zum Aufspalten der Kompostmiete ( 1 ) und Zuführen eines Teiles ( 1a ) bzw. Stranges letzterer ( 1 ) zu den Fräs- und Förderorganen ( 3, 4 ).

4. Vorrichtung nach den Ansprüchen 2 und 3,

   d a d u r c h   g e k e n n z e i c h n e t ,

   daß die Absiebeinrichtung ( 5, 6 ) zusammen mit dem Nachzerkleinerer ( 7, 7a, 7b, 10 ) eine von den Fräs- und Leitorganen ( 3, 4, 8, 9 ) trenn- bzw. abnehmbare Einheit bildet.

5. Vorrichtung nach einem oder mehreren der vorhergehenden Ansprüche,

   d a d u r c h   g e k e n n z e i c h n e t ,

   daß das Fräsorgan ( 3, 4 ) als eine Art in einem Gehäuse ( 4 ) umlaufendes Schaufelrad ( 4 ) ausgebildet, der Nachzerkleinerer ( 7 ) als mit Schlegeln ( 7a ) versehene, rotierende Arbeitswelle ( 7b ) gestaltet und letztere zumindest in ihrem unteren Bereich von einer Art Siebkäfig ( 10 ) umgeben ist.

0186771

Fig. 1

0186771

Fig. 2